# EUROPEAN PATENT APPLICATION

(11) **EP 4 686 722 A1**
(43) Date of publication of application: **04.02.2026**
(21) Application number: 24191397.9
(22) Date of filing: 29.07.2024
(51) Int. Cl.: C07F 7/08, B01J 31/22, C07F 15/00

(54) **ZINC DITHIOLATE COMPOUNDS**

(71) Applicant: Umicore AG & Co. KG, 63457 Hanau-Wolfgang (DE)
(72) Inventor: DOPPIU, Angelino, 63457 Hanau-Wolfgang (DE); AURIS, Sebastian, 63456 Hanau (DE)
(74) Representative: Clauswitz, Kai-Uwe Wolfram

(57) **Abstract**

The Invention relates to a method for the preparation of zinc dithiolate compounds by reacting aromatic 1,2-dithiols with zinc carboxylates in an organic solvents.

## Description

Ruthenium based stereo-retentive olefin metathesis catalysts have more become of interest recently and can be prepared by using dithiolates such as (arene-1,2-dithiolato)(ethylenediamine)zinc(II) compounds, such as (3,6-dichlorobenzene-1,2-dithiolato) (ethylenediamine)zinc(II), for example. Such catalysts and their preparation are shown, for example, in WO 2017/100585.

Such dithiolate species need to be isolated in a separate step. This isolation is difficult and not possible on a production scale because the required filtration is very slow, difficult and poses hazards as hot chloroform is needed to remove impurities.

In addition, the product contains ethylenediamine, which is classified as a very toxic substance and has been added to the "Substance of Very High Concern" (SVHC) list of ECHA. Moreover, even in traces, ethylenediamine can have a detrimental effect on the catalyst properties, see for example Fogg et al.: Decomposition of Olefin Metathesis Catalysts by Brønsted Base: Metallacyclobutane Deprotonation as a Primary Deactivating Event, J. Am. Chem. Soc. 2017, 139, 46, 16446-16449.

Mauduit, M. et al., Org. Lett. 2018, 20, 6822-6826 uses diethyl zinc (Zn(ethyl)₂) for the in situ generation of a Zn-dithiolate species. But Zn(Et)₂ is pyrophoric, sensitive to moisture and thus it is not well suitable for use in production.

WO 2014/201300 shows a method for making zinc dithiolate compounds in section [00602] from 3,6-dichlorobenzene-1,2-dithiol with a fourfold molar excess of zinc acetate and ethylenediamine at 22°C for one hour. The reaction product was assigned the following formula:

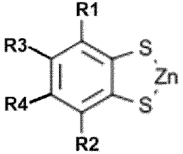

Zinc dithiolates, however, exhibit bad solubility. The zinc dithiolate of WO 2014/201300 is washed with hot chloroform, confirming the bad solubility and thus are bad to characterize and to analyze.

WO2018/087230, section [0084] shows an identical method of making the zinc dithiolate compound under the very same conditions from the very same educts as the zinc dithiolate of WO 2014/201300, but this time the structure shown is compound 10 having the structure given as follows:

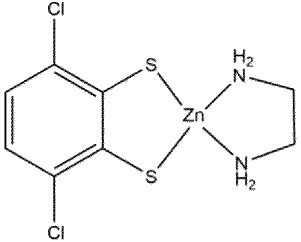

The differences in the structures of the dithiolate compound of WO 2014/201300 and WO2018/087230 show the difficulties of characterizing and analyzing such compounds, but also their bad solubility.

Due to growing demand for stereo-retentive catalysts, it was an objective of the Invention to provide a suitable method to provide zinc dithiolate species to allow a scalable process that delivers the production of stereo-retentive catalysts in good yield and purity.

A further problem to be solved was the investigation of an in-situ preparation of a Zn-dithiolate species without addition of ethylenediamine or other bases. Alternatively, reaction with an isolated Zn-dithiolate species containing no amine residue, was another option to solve the problem. Yet another problem to be solved was the provision of a zinc dithiolate compound having improved solubility in organic solvents.

This problem is solved by the conversion of a zinc carboxylate and dithiol to form a zinc-dithiolato complex, which can also be easily isolated. It was surprisingly found that in particular Zn-acetate or zinc pivalate can be reacted with dithiol and the zinc-dithiolato complex can be prepared without addition of ethylenediamine or other bases

This method provides a significant simplification of the process since no distillation is necessary anymore and no isolation of intermediate products have to be undertaken.

The product is easy to isolate in very high yields and purities. A further remarkable advantage is that dithiol of poor quality and low purity can well be used and the production method of the zinc-dithiolato complex acts as a purification step. This is particularly important as the dithiol is commercially available in poor purity (60-90%). In this way the quality problems are solved by using the method of the Invention as means for purification, no distillation for product isolation is needed because a simple filtration and washing procedure for product isolation is sufficient and in addition, increased yield and space utilization is effected.

The problem is solved by a method for making a zinc dithiolate compound by reacting a compound of formula 2 or formula 2a, 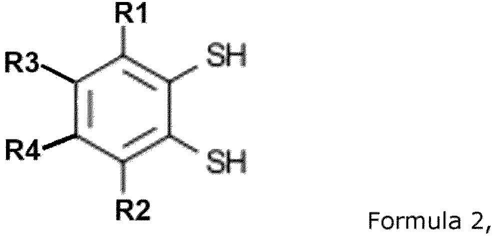 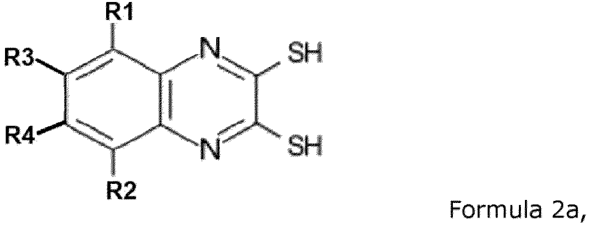 wherein R1 to R4 are, independently of each other, are selected from hydrogen, halogen, alkyl, aryl, or R1 with R3, R3 with R4 or R2 with R4 are forming together an aliphatic or aromatic ring, with a zinc carboxylate in an organic solvent.

R1 to R4 independently of each other, are selected from hydrogen, F, Cl, Br, I, C1 to C8 alkyl, or C5 to C14 aryl, optionally substituted with one or more substituents selected from the group consisting of F, Cl, Br, I, C1 to C8 alkyl, or C5 to C14 aryl or combinations thereof.

Alternatively, R1 with R3, R3 with R4 or R2 with R4, taken together, are forming an aromatic ring or an aromatic ring system exhibiting 5 to 14 carbon atoms; or R1 with R3, R3 with R4 or R2 with R4, taken together, are forming an aromatic ring or an aromatic ring system with 6 to 10 carbon atoms.

In particular, R3 and R4, taken together, are forming an aromatic ring or ring system which can exhibit 5 to 14 carbon atoms or 6 to 10 carbon atoms, optionally substituted with one or more substituents selected from the group consisting of F, Cl, Br, I, C1 to C8 alkyl, or C1 to C4 alkyl, or C5 to C14 aryl, or C6 to C10 aryl or combinations thereof.

In particular, R2 and R4, taken together, are forming an aromatic ring or ring system which can exhibit 5 to 14 carbon atoms or 6 to 10 carbon atoms, optionally substituted with one or more substituents selected from the group consisting of F, Cl, Br, I, C1 to C8 alkyl, or C1 to C4 alkyl, or C5 to C14 aryl, or C6 to C10 aryl or combinations thereof.

In particular, R1 and R3, taken together, are forming an aromatic ring or ring system which can exhibit 5 to 14 carbon atoms or 6 to 10 carbon atoms, optionally substituted with one or more substituents selected from the group consisting of F, Cl, Br, I, C1 to C8 alkyl, or C1 to C4 alkyl, or C5 to C14 aryl, or C6 to C10 aryl or combinations thereof.

In particular, R1 and R3, taken together, are forming an aromatic ring or ring system which can exhibit 5 to 14 carbon atoms or 6 to 10 carbon atoms, optionally substituted with one or more substituents selected from the group consisting of F, Cl, Br, I, C1 to C8 alkyl, or C1 to C4 alkyl, or C5 to C14 aryl, or C6 to C10 aryl or combinations thereof; and additionally R2 and R4, taken together, are forming an aromatic ring or ring system which can exhibit 5 to 14 carbon atoms or 6 to 10 carbon atoms, optionally substituted with one or more substituents selected from the group consisting of F, Cl, Br, I, C1 to C8 alkyl, or C1 to C4 alkyl, or C5 to C14 aryl, or C6 to C10 aryl or combinations thereof.

In this case, to avoid misunderstandings, the positions R1, R2, R3 or R4 not part of an aromatic ring or ring system can be selected from hydrogen, halogen, alkyl, aryl and can in particular be selected from hydrogen, F, Cl, Br, I, C1 to C8 alkyl, or C5 to C14 aryl, optionally substituted with one or more substituents selected from the group consisting of F, Cl, Br, I, C1 to C8 alkyl, or C5 to C14 aryl or combinations thereof; or the positions R1, R2, R3 or R4 not part of an aromatic ring or ring system can be selected from hydrogen, halogen, alkyl, aryl and can in particular be selected from hydrogen, F, Cl, Br, I, C1 to C4 alkyl, or C6 to C10 aryl, optionally substituted with one or more substituents selected from the group consisting of F, Cl, Br, I, C1 to C4 alkyl, or C6 to C10 aryl or combinations thereof.

More specifically, R1, R2, R3 and R4 are hydrogen, halogen (F, Cl, Br, I), methyl, ethyl n-propy, isopropyl, n-butyl, iso-butyl, tert.-butyl, or phenyl, naphthyl, fluorenyl, phenalenyl, anthracenyl, phenanthrenyl, which each can be unsubstituted or substituted with F, Cl, Br, I, C1 to C8 alkyl, such as, for example, methyl, ethyl n-propyl, isopropyl, n-butyl, iso-butyl, tert.-butyl, or combinations thereof.

In a specific embodiment, R1 and R2 are hydrogen, halogen, methyl, ethyl or phenyl, R3 and R4 are hydrogen, halogen, methyl, ethyl or phenyl or R3 und R4, taken together, are forming an aromatic ring or ring system with 6 to 10 carbon atoms, which are optionally substituted with one or more substituents selected from the group consisting of F, Cl, Br, I, C1 to C8 alkyl, or C5 to C14 aryl, C6 to C10 aryl or combinations thereof; or

R1 to R4 are selected from hydrogen, F, Cl, Br, I, C1 to C8 alkyl, or C5 to C14 aryl, optionally substituted with one or more substituents selected from the group consisting of F, Cl, Br, I, C1 to C8 alkyl, or C5 to C14 aryl or combinations thereof.

In yet another specific embodiment, R1 is hydrogen or halogen, or together with R3 may form an optionally substituted polycyclic ring; R3 is hydrogen, or together with R1 may form an optionally substituted polycyclic ring; R4 is hydrogen or together with R2 may form an optionally substituted polycyclic ring; R2 is optionally substituted C₆₋₁₀ aryl, halogen, or together with R4 may form an optionally substituted polycyclic ring.
[1] In one embodiment, R1 is halogen; R3 is hydrogen; R4 is hydrogen or together with R2 forms an optionally substituted naphtyl or phenantryl ring; R2 is halogen or together with R4 forms an optionally substituted naphtyl or phenantryl ring.
[2] In one more embodiment, R1 is hydrogen, methyl or Cl, or together with R3 forms 2-phenyl-naphthyl or phenanthryl; R3 is hydrogen, or together with R1 forms 2-phenyl-naphthyl or phenanthryl;
   R4 is hydrogen or together with R2 forms 2-phenyl-naphthyl, phenanthryl, or methylphenantryl; R2 is Cl, 3,5-dichloro-phenyl, phenyl, t-Bu or together with R4 forms 2-phenyl-naphthyl, phenanthryl or methylphenantryl.
[3] In a further embodiment, R1 is Cl; R3 is hydrogen; R4 is hydrogen or together with R2 forms naphthyl or phenanthryl; R2 is hydrogen, Cl, or together with R4 forms naphtyl or phenanthryl.
[4] In yet one more embodiment, R1 is hydrogen or Cl; R3 is hydrogen; R4 is hydrogen or together with R2 forms naphthyl or phenantryl; R2 is Cl, phenyl or together with R4 forms naphthyl or phenantryl.
[5] In yet a further embodiment, R1 is hydrogen, methyl or Cl, or together with R3 forms 2-phenyl-naphthyl or phenanthryl; R3 is hydrogen, or together with R1 forms 2-phenyl-naphthyl or phenanthryl; R4 is hydrogen or together with R2 forms 2-phenyl-naphthyl, naphtyl, phenanthryl, or methylphenantryl; R2 is Cl, 3,5-dichloro-phenyl, phenyl, t-Bu or together with R4 forms 2-phenyl-naphthyl, naphtyl, phenanthryl or methylphenantryl; or R1 is hydrogen or Cl; R3 is hydrogen; R4 is hydrogen or together with R2 form an optionally substituted naphthyl or an optionally substituted phenanthryl ring; R2 is Cl, phenyl or together with R4 form an optionally substituted naphthyl or an optionally substituted phenanthryl ring.

In another embodiment, R1 and R2 are hydrogen or halogen, in particular Cl or Br and R3 and R4 are hydrogen.

In a further embodiment, R1, R2, R3 and R4 are fluorine.

In yet another embodiment, R1, R2, R3 and R4 are so selected that the compound of formula 2 or formula 2a is selected from the group consisting of

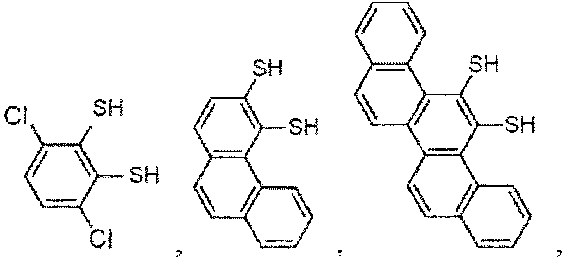

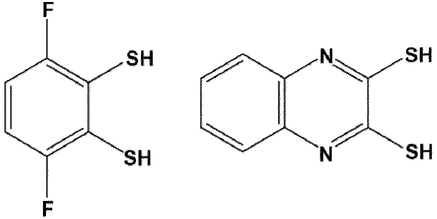

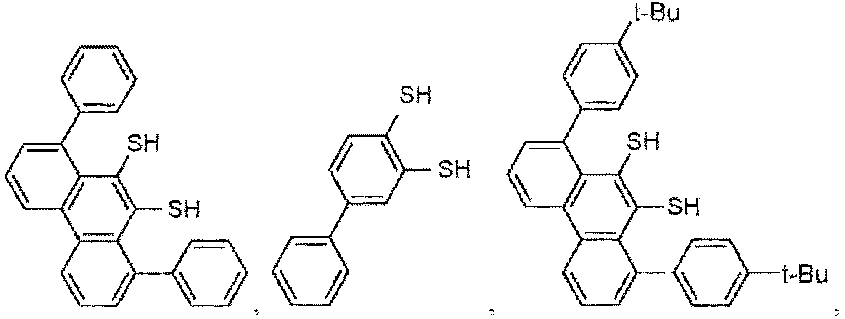

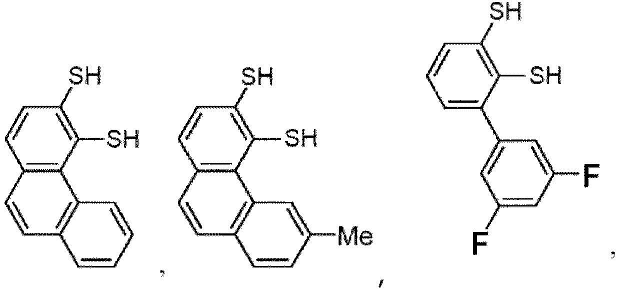

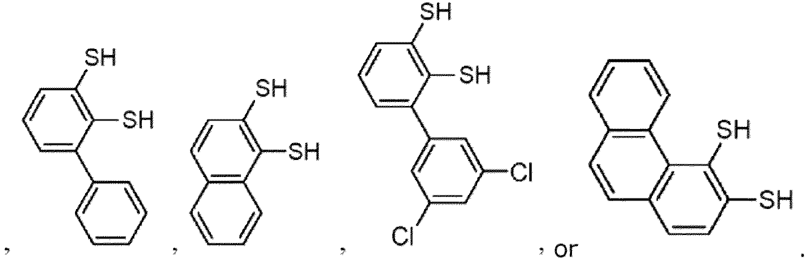

The zinc carboxylate can in principle be any soluble carboxylic acid salt of zinc, more specifically a zinc salt of a carboxylic acid exhibiting 1 to 8, in particular 1 to three carbon atoms, such as zinc formate, zinc acetate, zinc propionate, zinc isopropionate, zinc butyrate, zinc pivalate, zinc valerate, zinc caproate or zinc heptanoate, zinc octanoate, zinc 2-ethylhexanoate or zinc nonanoate, either water free or the hydrate. The use of zinc acetate (Zn(OAc)2) or zinc pivalate, either water free or as hydrate, has shown to be practical.

Suitable organic solvents are polar solvents, such as polar aprotic or polar protic solvents. Usually, organic solvent are selected from the group consisting of alkohols, ethers, ketones, esters and combinations thereof. More specifically, the organic solvent is selected from the group consisting of methanol, ethanol, isopropanol, tetrahydrofuran, acetone, ethyl acetate and combinations thereof. Acetone has shown to be a practical solvent for the reaction since it dissolves the aromatic dithiol, its impurities and the zinc carboxylate, but the zinc dithiolate shows a poor solubility, so it can be easily precipitated and filtrated as well as washed. For washing, acetone and petrol ether have been found useful.

The reaction can be carried out at temperatures of from 10°C to 50°C, in particular from 10°C to 40°C or from 15°C to 35°C or 20°C to 30°C. Generally, the reaction is quite robust and can be carried out at usual room temperatures so that normally no heating of the reation mixture is necessary.

Reaction times vary from about 2 hours to about 48 hours, in particular 4 to 36 hours or 6 to 24 hours.

Under the above conditions a zinc dithiolate compound with a nitrogen content of less than 1 weight percent can be obtained. Consequently, the Invention also relates to a zinc dithiolate compound with a nitrogen content of less than 1 weight percent, which is obtainable by the method above.

The Invention also relates to a method for making a ruthenium catalyst employing such a zinc dithiolate compound.

The invention thus also relates to a method for making a ruthenium catalyst comprising the steps of
- Providing a zinc dithiolate compound by a method as described above;
- Reacting the zinc dithiolate compound with a ruthenium compound of formula 3 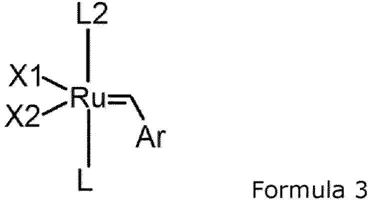 wherein X1 and X2 are, independently of each other, are anionic ligands and are the same or different; L and L2 are, independently of each other, neutral electron donor ligands and are the same or different; Ar is an aromatic group which may be substituted and that can be bridged with L;
- Obtaining a ruthenium catalyst of formula 4 or 4a, wherein the anionic ligands are a bridging dithiolate forming a ring via its sulfur atoms 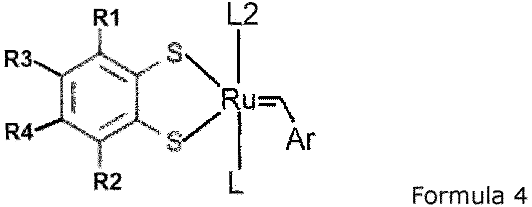 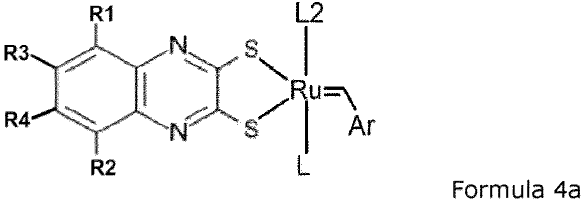 with R1 to R4 being as defined above.

Specifically, Ar can be an aromatic group bridged with L, wherein L is an alkoxy group being a substituent of Ar.

For the compounds of formula 3, anionic ligands X1 and X2, independently of each other, can be halogens selected from F, Cl, Br, I and combinations thereof, in particular Cl or Br. Usually X1 and X2 are the same, in particular X1 and X2 are the same and are Cl.

Ar is aryl, in particular aryl with 5 to 14 carbon atoms, or aryl with 6 to 10 carbon atoms, in particular phenyl or naphthyl, which is optionally substituted, in particular substituted with halogen, nitro, aminocarbonyl, alkyl with 1 to 8 carbon atoms or alkyl with 1 to 4 carbon atoms, alkoxy with 1 to 8 carbon atoms or alkoxy with 1 to 4 carbon atoms, aryl with 5 to 14 carbon atoms or aryl with 6 to 10 carbon atoms or combinations thereof. More specifically, aryl Ar can be substituted with one or more substituents selected from the group consisting of nitro, F, Cl, Br, I, C1 to C8 alkyl, C1 to C4 alkoxy, C6 to C10 aryl or combinations thereof. In particular, if Ar is substituted as described above, then Ar and L are bridged.

In an embodiment, Ar is aryl with 5 to 14 carbon atoms, or aryl with 6 to 10 carbon atoms, in particular phenyl, which is substituted with halogen, nitro, or aminocarbonyl and if Ar and L are bridged.

More specifically, aryl Ar is optionally substituted with one or more substituents selected from the group consisting of F, Cl, Br, I, C1 to C4 alkyl, C1 to C4 alkoxy, C6 to C10 aryl or combinations thereof.

More specifically, Ar is a structure of formula 5, wherein 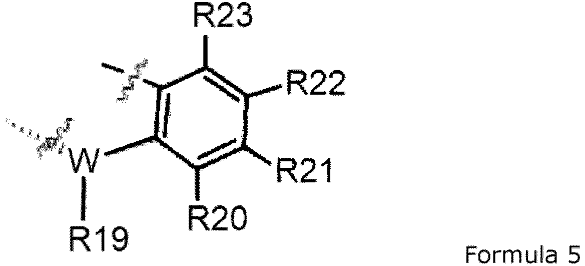
W is hydrogen, halogen selected from F, Cl, Br or I, particularly Cl, Br and I, or W is oxygen;
R19 is alkyl with 1 to 6 carbon atoms or phenyl, which is optionally substituted in the para position with nitro, C1 to C4 alkyl, C1 to C5 alkoxy, halogen selected from F, Cl, Br or I; or R19 is methyl, ethyl, isopropyl or tert.-butyl, with the proviso that if W is hydrogen or halogen, then R19 is nil;
R20, R21 and R23 are hydrogen, alkyl with 1 to 6 carbon atoms, aryl with 6 to 10 carbon atoms, or R20 is hydrogen, alkyl with 1 to 4 carbon atoms, aryl with 6 to 10 carbon atoms, or R19 is hydrogen, methyl, ethyl, isopropyl, phenyl or naphthyl.
R22 is hydrogen, nitro, Cl, Br, I or trifluormethyl, or a group of the formula -NH(C=O)R30 or -S[(=O)₂(-N(R30)₂)], with R30 being selected from alkyl, cycloalkyl or perhaloalkyl with 1 to 6 carbon atoms, an aryl or perfluoroaryl with 5 to 10 carbon atoms optionally substituted with nitro, Cl, Br, I or F an aldehyde, nitrile, in particular R30 is selected form the group consisting of methyl, ethyl, trifluormethyl, cyclohexyl, pentafluorophenyl, p-nitrophenyl; or
W is oxygen, R19 is alkyl with 1 to 4 carbon atoms, R20 is hydrogen or aryl with 6 to 10 carbon atoms, in particular phenyl, R21 and R23 are hydrogen, R22 is nitro, Cl, Br, I or trifluormethyl; or
W is oxygen, R19 is isopropyl, R20 is hydrogen or phenyl, R21 and R23 are hydrogen, R22 is nitro or trifluormethyl; or
W is oxygen, R19 is isopropyl, R20, R21 and R23 are hydrogen, R22 is nitro or trifluormethyl; or
W is oxygen, R19 is alkyl with 1 to 4 carbon atoms, R20 is phenyl, R21, R22 and R23 are hydrogen; or
W is oxygen, R19 is isopropyl, R20 is phenyl, R21, R22 and R23 are hydrogen.
L and L2 are neutral electron donor ligands.

In particular, L2 can be a phosphine or an NHC ligand.

In another embodiment, L is a sulfoxide, such as DMSO (dimethyl sulfoxide), a phosphine, or L is a halogen or an alkoxy group -O-R19 with R19 being a C1 to C6 alkyl.

In particular, L can be an alkoxy group -O-alkyl with alkyl having 1 to 6 carbon atoms, namely alkyl being selected from methyl, ethyl, propyl, isopropyl, n-butyl, isobutyl, tert.-butyl or -O-aryl with aryl having 5 to 10 carbon atoms, in particular phenyl, which can be optionally substituted with alkoxy as defined hereinabove, nitro, halogen such as F, Cl, Br, I, amino, alkylamino or dialkylamino with alkyl as defined hereinabove, more specifically with the substituent in the para-position to the oxygen atom.

L can also be a sulfoxide carrying two alkyl substituents as defined above, or wherein the two alkyl are a saturated alkyl bridge so at to form a cyclic sulfoxide; suitable sulfoxides are, for example, dimethyl sulfoxide (DMSO) or the cyclic tetramethylensulfoxide. Other suitable embodiments for L is pyridine.

In another suitable embodiment both L and L2 can be defined as phosphines having the structure 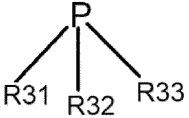 wherein the groups R31, R32 and R33 are each independently for each occurrence selected from the group consisting of substituted or unsubstituted primary, secondary or tertiary alkyl or cycloalkyl with 1 to 20, in particular 1 to 10 carbon atoms; substituted or unsubstituted aryl or heteroaryl exhibiting 5 to 20, in particular 5 to 10 carbon atoms, or optionally two or more of the groups R31, R32 and R33 are fused to form a ring.

More specifically, R31, R32, R33 may be substituted, for example once, twice, or three times, e.g. once, i.e. formally replacing one or more hydrogen atoms of the alkyl, cycloalkyl, aryl or heteroaryl group. Examples of substituents are halogen (e.g. fluoro, chloro, bromo and iodo), SF₅, CF₃, alkyl, aryl hydroxyl, nitro, amino, alkoxy, alkylthio, carboxy, cyano, thio, formyl, ester, acyl, thioacyl, amido, sulfonamido, carbamate and the like. Where the substituent is amino it may be amino, hydrocarbylamino or dihy-drocarbylamino, where the hydrocarbyl substituents on the nitrogen may be alkyl, aryl or heteroaryl such as substituted or unsubstituted C1- C20 alkyl, aryl or heteroaryl or even C1-C10 alkyl, aryl or heteroaryl. Where the groups R31, R32, R33 are cycloalkyl they may be for example cyclohexyl or cyclopentyl. The cyclohexyl or cyclopentyl groups if present may be substituted as described hereinabove. As known to those skilled in the art, heteroaryl moieties are a subset of aryl moieties that comprise one or more heteroatoms, typically O, N or S, in place of one or more carbon atoms and any hydrogen atoms attached thereto. Exemplary R31, R32, R33 aryl substituents, for example, include phenyl or naphthyl that may be substituted. Exemplary R31, R32, R33 heteroaryl substituents, for example, include pyridinyl, furanyl, pyrrolyl and pyrimidinyl. Further examples of heteroaromatic rings include pyridazinyl (in which 2 nitrogen atoms are adjacent in an aromatic 6-membered ring); pyrazinyl (in which two nitrogen atoms are 1,4-disposed in a 6-membered aromatic ring); pyrimidinyl (in which 2 nitrogen atoms are 1,3-disposed in a 6-membered aromatic ring); or 1,3,5- triazinyl (in which 3 nitrogen atoms are 1,3,5-disposed in a 6-membered aromatic ring).

Examples of L or L2 as being phosphines are Triphenylphosphine, Tricyclohexylphosphine,Tri(o-tolyl)phosphine, Tris(4-chlorphenyl)phosphine, Tris(3-chlorphenyl)phosphine, Tris-(4-fluorphenyl)-phosphine, Tris-(pentafluor-phenyl)-phosphine, Tris(4-trifluormethylphenyl)phosphine, Tris(trimethylsilyl)phosphine, Diphenyl(p-tolyl)phosphine, Tris-(4-methoxyphenyl)-phosphine, Tri(p-tolyl)phosphine, Tris(2,4,6-trimethylphenyl)phosphine, Tris(3,5-dimethylphenyl)phosphine, Tri(1-adamantyl)phosphine, Tri(2-adamantyl)phosphine.

In another embodiment L is a phosphite of the structure 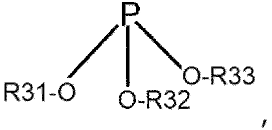 wherein R31, R32 and R33 are as defined above for the section relating to phosphines. Examples for phosphite include P(OMe)₃, P(OEt)₃, P(OPr)₃ and P(OPh)₃. Examples of group L as a phosphine include in particular PCy₃ and PPh₃ - where Cy is cyclohexyl and Ph is phenyl. Examples of group L as a phosphite include P(OMe)₃ P(OEt)₃, P(OiPr)₃ and P(OPh)₃.

Examples of combinations of L and L2 for the compounds of formula 3 or the catalysts of formula 4 described herein are where L2 is nucleophilic car-bene, in particular N-heterocyclic carbene/phosphite, phosphine/phosphite and phosphine/phosphine.

NHC ligands (N-heterocyclic carbenes) are well known in catalysis and a description thereof can be found, for example, in Frank Glorius, "N-Heterocyclic Carbenes in Transition Metal Catalysis", Springer Verlag Heidelberg 2007, in particular the general definition on pages 10 and 11, figures 3 to 4.

In one embodiment, L2 can be represented by the structure of **Formula 6** 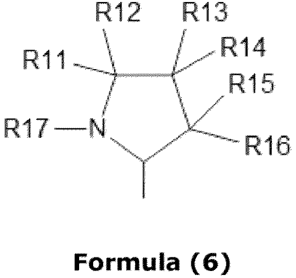 wherein:
R11, R12, R13 and R14 are independently hydrogen, unsubstituted C₁-C₁₂ alkyl, substituted C₁-C₁₂ alkyl, unsubstituted C₄-C₁₂ cycloalkyl, substituted C₄-C₁₂ cycloalkyl, unsubstituted C₅-C₂₄ aryl, substituted C₅-C₂₄ aryl, unsubstituted C₅-C₂₄ heteroaryl, substituted C₅-C₂₄ heteroaryl, unsubstituted C₆-C₂₄ aralkyl, substituted C₆-C₂₄ aralkyl, unsubstituted C₆-C₂₄ heteroaralkyl or substituted C₆-C₂₄ heteroaralkyl;
R15 is methyl, ethyl, *n*-propyl, or phenyl; or together with R16 can form a five to ten membered cycloalkyl or heterocyclic ring, with the carbon atom to which they are attached; and
R16 is methyl, ethyl, *n*-propyl, or phenyl; or together with R15 can form a five- to ten- membered cycloalkyl or heterocyclic ring, with the carbon atom to which they are attached;
R17 is adamantyl, 2,4,6-trimethylphenyl, 2,6-di-*iso*-propylphenyl, 2-methyl-6-*tert*-butylphenyl, 2-*iso*-propyl-6-methylphenyl, 2-*iso*-propyl-phenyl, 2,6-di-ethylphenyl, 2-ethyl-6-methylphenyl or 2-methyl-phenyl.

In another embodiment, L2 can be represented by the structure of **Formula (7) or Formula (8)** 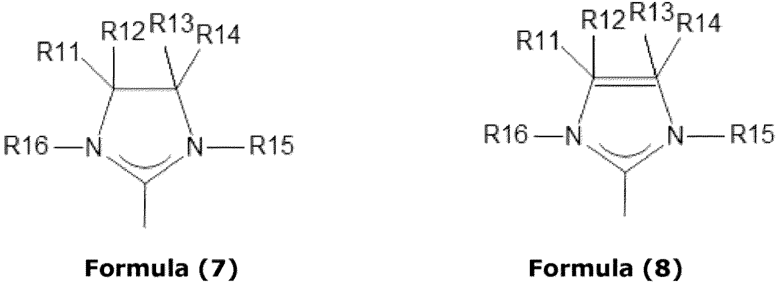 wherein:
R11, R12, R13 and R14 are independently C₁-C₆ alkyl or hydrogen;
R15 is 2,4,6-trimethylphenyl, 2,6-di-*iso*-propylphenyl, 2-methyl-6-*tert*-butylphenyl, 2-*iso*-propyl-6-methylphenyl, 2-*iso*-propyl-phenyl, 2,6-di-ethylphenyl, 2-ethyl-6-methylphenyl, 2,4,6-trifluorophenyl, 2,6-difluorophenyl, 3,5-di-*tert*-butylphenyl, 2,4-dimethylphenyl or 2-methyl-phenyl;
R16 is adamantyl, 2,4,6-trimethylphenyl, 2,6-di-iso-propylphenyl, 2-methyl-6-*tert*-butylphenyl, 2-*iso*-propyl-6-methylphenyl, 2-*iso*-propyl-phenyl, 2,6-di-ethylphenyl, 2-ethyl-6-methylphenyl, 2,4,6-trifluorophenyl, 2,6-difluorophenyl, 3,5-di-*tert*-butylphenyl, 2,4-dimethylphenyl or 2-methyl-phenyl.

The zinc dithiolate in this method for making a ruthenium catalyst can be provided by a method as described above. In this context, the step of providing the zinc dithiolate compound may be carried out *in situ* in the same reactor and is used in the following steps in the method for making the ruthenium catalyst described above, which is carried out as a one pot reaction.

In one embodiment the method for making the ruthenium catalyst described above as a one pot reaction is carried out wherein the step of providing the zinc dithiolate compound is carried out in the same reactor used in the following steps and once completed, the missing educts for making the ruthenium catalyst (such as e.g. the ruthenium compound of formula 3) are added lateron once the zinc dithiolate has been made.

In another embodiment the method for making the ruthenium catalyst described above as a one-pot reaction is carried out wherein the step of providing the zinc dithiolate compound is carried out in the same reactor used in the following steps and the educts for making the ruthenium catalyst (such as e.g. the ruthenium compound of formula 3) are added before the step of providing the zinc dithiolate compound is completed, so that all these steps are carried out in one reaction mixture.

In this context, the step of providing the zinc dithiolate compound can be carried out *in situ* in the reaction mixture with the ruthenium compound of formula 3 and the method is carried out as a one pot reaction.

The subject patent application also relates to a compound of the following formula 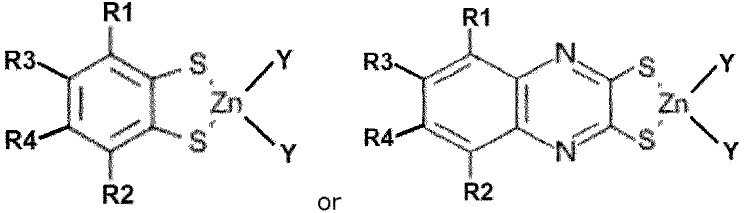 wherein R1 to R4 are defined as above and Y is nil or a neutral electron donor ligand that is not a base, in particular not a nitrogen containing ligand and more specifically that is not an amine, but it may be a solvent, for example DMSO (dimethyl sulfoxide). Such zinc dithiolate compounds exhibit nitrogen contents of less than 0.2 weight percent.

More specifically, the Invention also relates to compounds of the structures 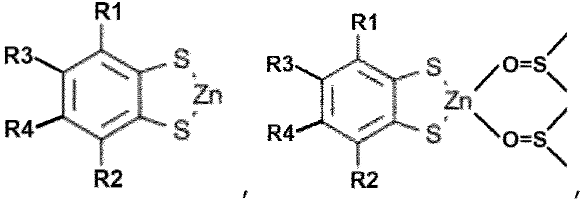 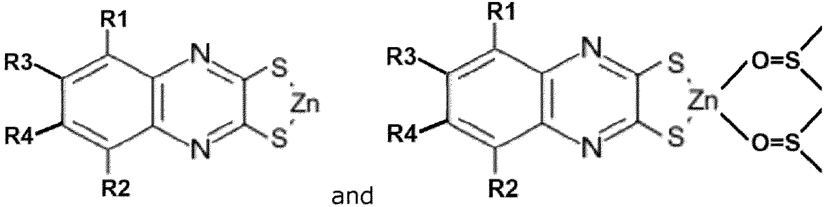 exhibiting a nitrogen content of less than 0.2 weight percent determined by elemental analysis.

### Examples

### Example 1: Preparation of Zinc dithiolate according to the invention

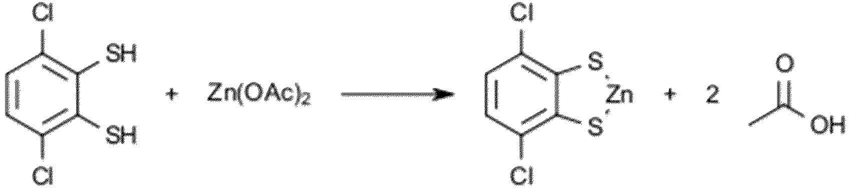

An inert 10L reaction vessel is charged with acetone (3,5 L) and the dithiol (781 g, 2.61 mol, 70.70 wt%). Zinc acetate (609 g, 2.75 mol) and acetone (3 L) are added subsequently to the obtained solution. The suspension is stirred for 24 h at ambient temperature. The formation of an off-white solid is observed. The material is isolated by filtration and washed with aceton (3x1 L) and petrol ether (1 L). The isolated material is dried overnight at 25 °C *in-vacuo.* Zinc dithiolate was obtained as an off-white solid (713 g, 79.5% corrected yield).

A broad spectrum of analysis was done to characterize the obtained materials and to draw a comparison between zinc dithiolate and the reported zinc dithiolate ethylene diamine complex.

¹H NMR (600 MHz, DMSO-d₆): 6.80 (s, 2H, product),3.38 (s, water), 2.08 (s, acetone).

¹³C NMR (600 MHz, DMSO-d₆): 206.96, 147.34, 133.22, 122.01, 31.16.

Zn: 20.30 wt%, C: 29.1 wt%, H: 1.9 wt%, N: <0.2 wt%, S: 21.0 wt% DSC: endothermal effect at ca. 219 °C

TGA: 14% weight loss (acetone and water)

It can be concluded that isolation of zinc dithiolate proves to be a reproducible purification method to achieve excellent ligand quality without the need of toxic additives. The isolated material consists of approx. 80 wt% dithiolate, 10 wt% water and 10 wt% acetone. No other signal from impurities are detected by NMR. The composition was determined by elemental analysis, qNMR and TGA. We therefore propose the existence of a zinc dithiolate-hydrate-acetone complex. Residual solvent can be removed by drying at higher temperature *in-vacuo.* The downside of dried material is a significantly lower solubility in solvents other than DMSO.

### Comparative Example 2: Preparation of (3,6-dichlorobenzene-1,2-dithiolato)(ethylenediamine)zinc(II)

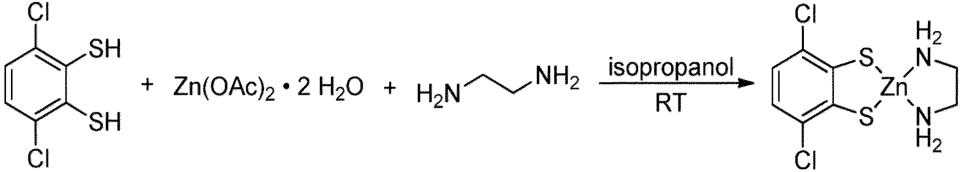

Under ambient atmosphere, a 250 mL round bottom flask equipped with a magnetic stir bar is charged with 3,6-dichlorobenzene-1,2-dithiol (2.00 g, 9.47 mmol), zinc acetate dihydrate (8.32 g, 37.9 mmol), ethylenediamine (3.80 mL, 56.8 mmol), and isopropanol (100 mL). The suspension is rapidly stirred for 24 h at room temperature. The resulting precipitate is isolated by filtration, washed with methanol (50 mL), hot chloroform (50 mL), then dried in vacuo overnight affording (3,6-dichlorobenzene-1,2-dithiolato) (ethylenediamine) zinc(II) as an off-white to light yellow solid (2.78 g, 87.9%). ¹H NMR (400 MHz, DMSO-d₆) δ ppm: 6.78 (br s, 2H), 4.06 (br s, 4H), 2.65 (br s, 4H).

¹H NMR (600 MHz, DMSO-d₆): 6.80 (br s, 2H), 4.06 (br s, 4H), 2.67 (br s, 4H).

¹³C NMR (600 MHz, DMSO-d₆): 147.94, 132.23, 121.97, 40.90.
Zn: 19.94 wt%, C: 28.9 wt%, H: 2.9 wt%, N: 8.4 wt%, S: 19.10 wt%
DSC: endothermal effect at 344.44 °C

### Example 3: One-Pot Synthesis M2102 in Aceton

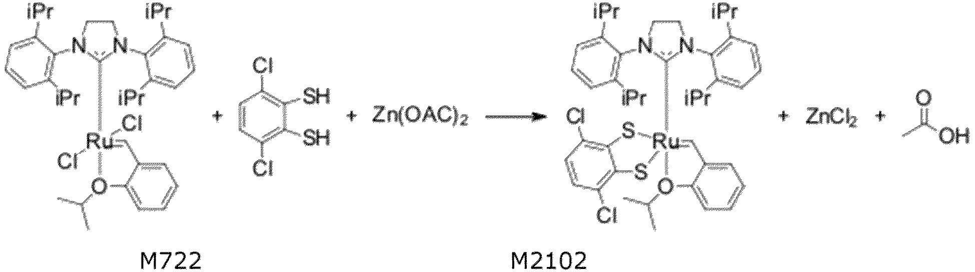

An inert 10L reaction vessel is charged with acetone (4L) and dithiol (316.7 g, 1.5 mol, 1.3 eq.). Zinc acetate (329.3 g, 1.5 mol, 1.3 eq.), M722 (824.5 g, 1.16 mol) and 650 mL Acetone are added subsequently to the obtained solution. The suspension is heated to 55 °C for 5 h - during that time, the formation of a dark yellow solid is observed. The reaction mixture is brought to 20 °C before the desired product is isolated by filtration. The isolated material is washed with Acetone (2x1,4 L) and Methanol (5x1,25 L) and afterwards dried at 40 °C overnight *in-vacuo.* M2102 is obtained as a dark yellow, crystalline solid (668.6g, 73% yield).

¹H NMR (600 MHz, *CD₂Cl₂*) δ ppm: 14.52 (s, 1H), 7.38 - 7.46 (m, 2H), 7.32 - 7.38 (m, 2H), 7.30 (br d, 1H), 7.19 (br d, 1H), 6.94 (d, 1H), 6.89 (br d, 1H), 6.77 - 6.83 (m, 2H), 6.73 (br d, 1H), 6.54 (d, 1 H), 4.88 - 5.05 (m, 1H), 4.29 - 4.42 (m, 1H), 4.10 - 4.23 (m, 1H), 4.00 (br d, 1H), 3.82 - 3.90 (m, 1H), 3.78 - 3.97 (m, 3H), 3.09 (br s, 1H), 2.44 (br d, 1H), 1.90 (br d, 3H), 1.42 (br d, 3H), 1.36 (br d, 3H), 1.23 - 1.32 (m, 7H), 1.07 (br d, 3H),1.00 - 1.01 (m, 1H), 0.93 (br d, 2H), 0.90 - 0.97 (m, 1H), 0.53 (br d, 3H), 0.04 (br d, 3H). Ru: 11.94 wt%, Zn: 0.48 wt%, insoluble components: 0.74 wt%.

### Examples 4: Synthesis of M2102 in various solvents

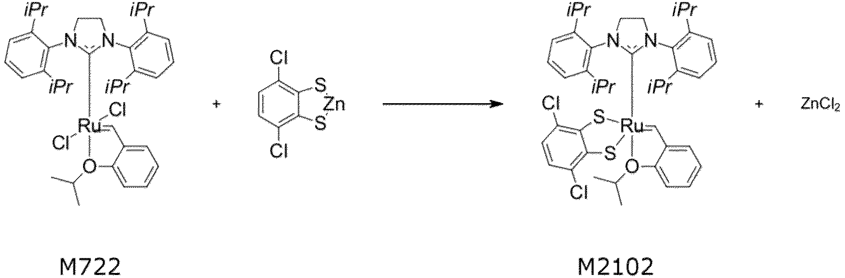

An inert 10 L reaction vessel is charged with THF (5 L) and Zinc dithiolate (1,15 kg, 1,88 mol, 1.1 eq.). M722 (1,22 kg, 1,71 mol) and THF (4,5 L) are added subsequently to the suspension. Afterwards, the reaction mixture is heated to 55 °C for 5 h. The formation of a dark yellow solid is observed. The solid is isolated by filtration and washed with Acetone (1.5 L), Methanol (5x1.2 L) and Petrol ether (1.5 L). The isolated material is dried overnight at 40 °C *in-vacuo.* M2102 is obtained as a dark yellow, micro-crystalline solid (1.24 kg, 85% yield).

¹H NMR (600 MHz, *CD₂Cl₂*) δ ppm: 14.52 (s, 1H), 7.38 - 7.46 (m, 2H), 7.32 - 7.38 (m, 2H), 7.30 (br d, 1H), 7.19 (br d, 1H), 6.94 (d, 1H), 6.89 (br d, 1H), 6.77 - 6.83 (m, 2H), 6.73 (br d, 1H), 6.54 (d, 1 H), 4.88 - 5.05 (m, 1H), 4.29 - 4.42 (m, 1H), 4.10 - 4.23 (m, 1H), 4.00 (br d, 1H), 3.82 - 3.90 (m, 1H), 3.78 - 3.97 (m, 3H), 3.09 (br s, 1H), 2.44 (br d, 1H), 1.90 (br d, 3H), 1.42 (br d, 3H), 1.36 (br d, 3H), 1.23 - 1.32 (m, 7H), 1.07 (br d, 3H),1.00 - 1.01 (m, 1H), 0.93 (br d, 2H), 0.90 - 0.97 (m, 1H), 0.53 (br d, 3H), 0.04 (br d, 3H). Ru: 11.53 wt%, Zn: 280 ppm, insoluble components: 0.17 wt%.

The synthesis was repeated, employing Acetone, Methyl-tert.-butyl ether (MTBE), Ethyl acetate, 2-Methyl-THF or cyclopentylmethylether (CPME) as solvent, which all showed to be suitable solvents.

### Example 5: M3002 One-Pot Procedure

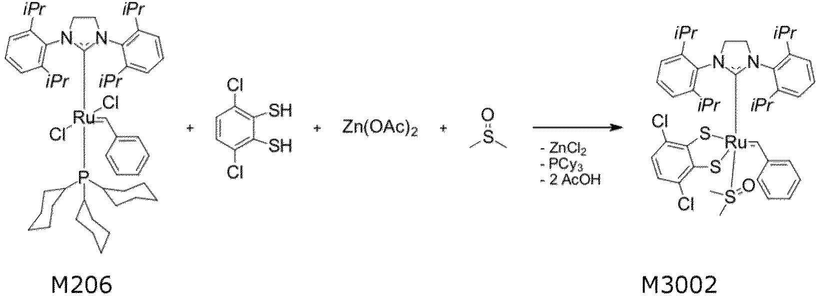

An inert 250 mL flask is charged with Methanol (40 mL) and Dithiole (1.3 g, 5.89 mmol, 1.1 eq.). Zinc acetate (1.3 g, 5.89 mmol, 1.1 eq.) is added and the reaction mixture is stirred at ambient temperature for 1 h. M206 (5 g, 5.36 mmol) and DMSO (2,1 g, 26.79 mmol, 5 eq.) are added subsequently to the suspension. The reaction mixture is stirred overnight at ambient temperature. Formation of a dark yellow solid was observed. The reaction mixture was brought to 0 °C before the desired product was isolated by filtration. The isolated material was washed with Methanol (3x10 mL) and afterwards dried at 40 °C overnight in-vacuo. M3002 is obtained as a dark green, crystalline solid (3.9 g, 84% yield). M3002 can be also prepared in high yield (>90%) and very good purity using isolated Zn dithiolate.

### Example 6: X-ray diffraction analysis

Single crystals (colourless plates) of suitable quality for X-ray diffraction analysis were grown by dissolving 3 mg of the zinc dithiolate obtained in Example 1 in the minimum amount of DMSO, layering with ethyl acetate (1 mL), and allowing the solution to stand at room temperature overnight.

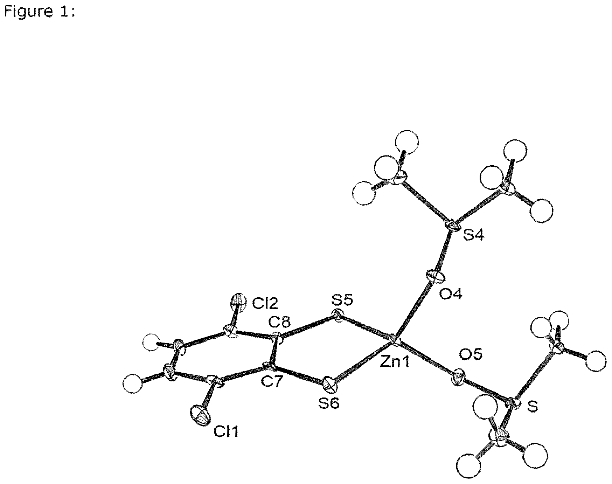

A structural determination by was carried out with these crystals. Figure 1 shows a structure refinement for the compound. The crystal data is listed below:

| | | |
|---|---|---|
| Empirical formula | C₁₀ H₁₄ Cl₂ O₂ S₄ Zn | |
| Formula weight | 430.79 | |
| Temperature | 100.15 K | |
| Wavelength | 1.54184 Å | |
| Crystal system, space group | Monoclinic, P 1 21/n 1 | |
| Unit cell dimensions | a = 9.5563(2) Å | alpha = 90 deg. |
| | b = 8.0105(2) Å | beta = 90.546(2) deg. |
| | c = 21.1229(4) Å | gamma = 90 deg. |
| Volume | 1616.90(6) Å³ | |

## Claims

1. Method for making a zinc dithiolate compound by reacting a compound of formula 2 or 2a, 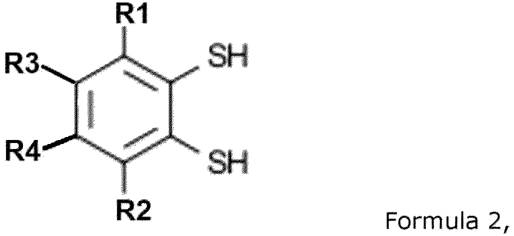 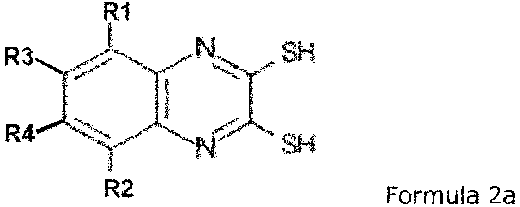 wherein R1 to R4 are, independently of each other, are selected from hydrogen, halogen, alkyl, aryl, or R1 with R3, R3 with R4 or R2 with R4 are forming together an aliphatic or aromatic ring, with a zinc carboxylate in an organic solvent.

2. Method of claim 1, wherein R1 to R4 are, independently of each other, are selected from hydrogen, F, Cl, Br, I, C1 to C8 alkyl, or C5 to C14 aryl, optionally substituted with one or more substituents selected from the group consisting of F, Cl, Br, I, C1 to C8 alkyl, or C5 to C14 Aryl or combinations thereof.

3. Method of claim 1 or 2, wherein R1 with R3, R3 with R4 or R2 with R4, taken together, are forming an aromatic ring or an aromatic ring system exhibiting 5 to 14 carbon atoms.

4. Method of any of claims 1 to 3, wherein R1 and R2 are hydrogen, halogen, methyl, ethyl or phenyl, R3 and R4 are hydrogen, halogen, methyl, ethyl or phenyl or R3 und R4, taken together, are forming an aromatic ring or ring system with 6 to 10 carbon atoms.

5. Method of any of claims 1 to 4, wherein the zinc carboxylate is zinc acetate (Zn(OAc)₂) or zinc pivalate.

6. Method of claim 5, wherein the organic solvent is selected from the group consisting of alkohols, ethers, ketones, esters and combinations thereof.

7. Method of claim 5 or 6, wherein the organic solvent is selected from the group consisting of methanol, ethanol, isopropanol, tetrahydrofuran, acetone, ethyl acetate and combinations thereof.

8. Method of any of claims 1 to 7, wherein the reaction temperature is from 10°C to 40°C.

9. Method of any of claims 1 to 8, wherein the reaction time is from 2 hours to about 48 hours, in particular 4 to 36 hours or 6 to 24 hours.

10. A zinc dithiolate compound with a nitrogen content of less than 1 weight percent, obtainable by the method of any of claims 1 to 9.

11. Method for making a ruthenium catalyst comprising the steps of
- Providing a zinc dithiolate compound by a method of any of claims 1 to 9;
- Reacting the zinc dithiolate compound with a ruthenium compound of formula 3 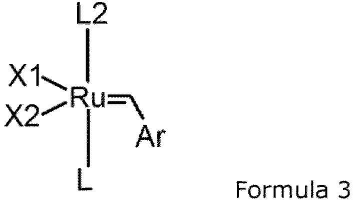 wherein X1 and X2 are, independently of each other, are anionic ligands and are the same or different; L and L2 are, independently of each other, neutral electron donor ligands and are the same or different; Ar is an aromatic group which may be substituted and that can be bridged with L, if L is an alkoxy group;
- Obtaining a ruthenium catalyst of formula 4 or 4a, wherein the anionic ligands are a bridging dithiolate forming a ring via its sulfur atoms 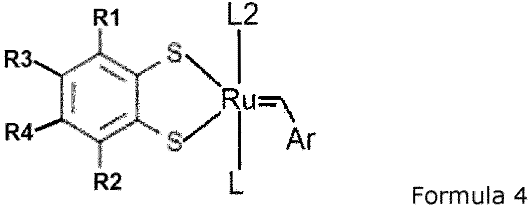 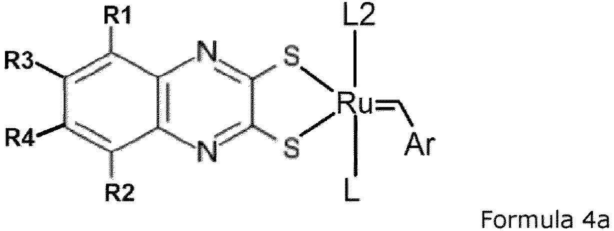 with R1 to R4 being as defined in one or more of the preceding claims.

12. Method of claim 11, wherein the zinc dithiolate compound is provided by a method of any of claims 1 to 9 *in situ* in the reaction mixture with the ruthenium compound of formula 3 and the method is carried out as a one pot reaction.

13. A zinc dithiolate compound of the formula 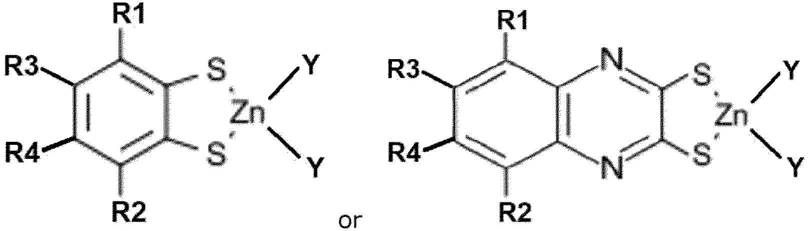 wherein R1 to R4 are as defined in claims 1 to 4, Y is nil or an electron donor ligand that is not a nitrogen compound and the zinc dithiolate compound is exhibiting a nitrogen content of less than 0.2 weight percent.

14. A zinc dithiolate compound of claim 13 of the structure
